# EUROPEAN PATENT APPLICATION

(11) **EP 3 561 304 A1**
(43) Date of publication of application: **30.10.2019**
(21) Application number: 18744184.5
(22) Date of filing: 25.01.2018
(51) Int. Cl.: F04C 18/02, F04C 27/00, F04C 29/00, F16J 15/3232

(54) **SCROLL COMPRESSOR AND ASSEMBLY METHOD THEREOF**

(30) Priority: 27.01.2017 JP 2017013325
(71) Applicant: Mitsubishi Heavy Industries, Ltd., Chiyoda-ku, Tokyo 1008332 (JP)
(72) Inventor: HIRATA, Hirofumi, Tokyo 108-8215 (JP); ITO, Takahide, Tokyo 108-8215 (JP); YAMASHITA, Takuma, Tokyo 108-8215 (JP)
(74) Representative: Cabinet Beau de Loménie
(86) International application number: PCT/JP2018/002299
(87) International publication number: WO 2018/139543

(57) **Abstract**

This scroll compressor is provided with a scroll member which has a compression chamber which compresses a work fluid, a housing which houses the scroll member, a second drive-side shaft (72c) which discharges compressed work fluid from the compression chamber and which rotates about an axis with respect to the housing, and a seal member (16) which contacts and forms a seal with the outer peripheral surface X of the second drive-side shaft (72c). On the outer peripheral surface (X) that contacts the seal member (16), the second drive-side shaft (72c) is provided with a surface hardened part (Y).

## Description

### Technical Field

For example, the present invention relates to a scroll compressor suitably used for a double rotation scroll compressor and an assembly method thereof.

### Background Art

In the related art, a scroll compressor is known in which both a driving-side scroll member and a driven-side scroll member rotate together (refer to PTL 1). The scroll compressor disclosed in PTL 1 is provided with a shaft seal body (seal member) for sealing an outer periphery of a driven shaft (discharge cylinder) having a discharge port for discharging gas.

### Citation List

### Patent Literature

[PTL 1] Japanese Unexamined Patent Application Publication No. 62-206282

### Summary of Invention

### Technical Problem

However, according to a structure in which the outer periphery of the rotating discharge cylinder is sealed with the seal member, sliding friction occurs at a seal contact portion between the seal member and the outer periphery of the discharge cylinder. If a lightweight material such as an aluminum alloy is used in order to reduce a weight of the discharge cylinder, since the lightweight material has a relatively low degree of hardness, an outer peripheral surface of the discharge cylinder may wear, thereby causing a possibility of poor sealing performance.

The present invention is made in view of these circumstances, and an object thereof is to provide a scroll compressor and an assembly method thereof, which can reduce wear caused by sliding friction occurring when sealing an outer peripheral surface of a discharge cylinder rotating around an axis.

### Solution to Problem

In order to solve the above-described problem, a scroll compressor and an assembly method thereof according to the present invention adopt the following means.

That is, according to an aspect of the present invention, there is provided a scroll compressor including a pair of scroll members that have a compression chamber for compressing a working fluid, a housing that houses the pair of scroll members, a discharge cylinder that discharges the compressed working fluid from the compression chamber, and that rotates around an axis with respect to the housing, and a seal member that seals an outer peripheral surface of the discharge cylinder by coming into contact with the outer peripheral surface of the discharge cylinder. The discharge cylinder includes a wear resistant portion formed on the outer peripheral surface which comes into contact with the seal member.

There is a possibility that the outer peripheral surface of the discharge cylinder which comes into contact with the seal member may wear due to sliding friction. In particular, in a case where a relatively lightweight material such as aluminum alloy is adopted for the rotating discharge cylinder, the possibility of wear increases. If the discharge cylinder wears, sealing performance becomes poor, thereby causing an increasing loss of the compressor. Therefore, the wear resistant portion is disposed on the outer peripheral surface of the discharge cylinder which comes into contact with the seal member. In this manner, the wear caused by the sliding friction is reduced.

As the wear resistant portion, it is possible to adopt nickel-phosphorus plating and surface hardening using diamond like carbon (DLC), or an iron-based cylindrical member disposed on the outer peripheral surface of the discharge cylinder.

Furthermore, the scroll compressor according to the aspect of the present invention may further include a bearing that rotatably supports the discharge cylinder with respect to the housing. The seal member may be located on a tip side of the discharge cylinder from the bearing. In the discharge cylinder, an outer diameter on the tip side from a support portion supported by the bearing may be smaller than an outer diameter at a support position.

The bearing for rotatably supporting the discharge cylinder is disposed, and the seal member is positioned on the tip side of the rotating cylinder from the bearing. In a case of this configuration, when assembled, the tip side of the discharge cylinder may be first inserted into the bearing in some cases. In this case, if the outer peripheral surface of the discharge cylinder comes in contact with the bearing, the discharge cylinder is damaged, thereby causing a possibility of poor sealing performance. In order to prevent this possibility, the outer diameter on the tip side of the discharge cylinder from the support position supported by the bearing is caused to be smaller than the outer diameter at the support position. In this manner, the discharge cylinder can be inserted into the bearing without any damage to the discharge cylinder.

Furthermore, the scroll compressor according to the aspect of the present invention may further include a bearing that rotatably supports the discharge cylinder with respect to the housing. The seal member may be located on a tip side of the discharge cylinder from the bearing. The wear resistant portion may be a cylindrical member attached to a tip of the discharge cylinder. An outer diameter of the wear resistant portion may be larger than an outer diameter at a support position where the discharge cylinder is supported by the bearing.

The bearing for rotatably supporting the discharge cylinder is disposed, and the seal member is positioned on the tip side of the rotating cylinder from the bearing. In a case of this configuration, when assembled, the tip side of the discharge cylinder may be first inserted into the bearing in some cases. In this case, a structure is adopted in which the wear resistant member is fixedly attached to the tip of the discharge cylinder. Accordingly, the wear resistant member can be located after the discharge cylinder is inserted into the bearing. In this manner, it is possible to increase the outer diameter of the wear resistant member than the outer diameter at the support position where the discharge cylinder is supported by the bearing. Therefore, the sealing performance can be improved by increasing interference of the seal member.

Furthermore, the scroll compressor according to the aspect of the present invention may further include a drive shaft rotationally driven by a drive unit. The scroll compressor may be a double rotation scroll compressor that includes a driving-side scroll member connected to the drive shaft so as to perform rotational movement and a driven-side scroll member to which power is transmitted from the driving-side scroll member so as to perform rotational movement, as the pair of scroll members.

In addition, according to another aspect of the present invention, there is provided an assembly method of a scroll compressor including a pair of scroll members that have a compression chamber for compressing a working fluid, a housing that houses the pair of scroll members, a discharge cylinder that discharges the compressed working fluid from the compression chamber, and that rotates around an axis with respect to the housing, a bearing that rotatably supports the discharge cylinder with respect to the housing, and a seal member that is located on a tip side of the discharge cylinder from the bearing, and that seals an outer peripheral surface of the discharge cylinder by coming into contact with the outer peripheral surface of the discharge cylinder. The discharge cylinder includes a wear resistant portion formed on an outer peripheral surface which comes into contact with the seal member, and an outer diameter on the tip side from a support portion supported by the bearing is smaller than an outer diameter at a support position. The assembly method includes positioning the discharge cylinder and the bearing after a tip of the discharge cylinder is inserted into the bearing.

When the tip side of the discharge cylinder is first inserted into the bearing, the outer diameter on the tip side of the discharge cylinder from the support position supported by the bearing is decreased than the outer diameter at the support position. Accordingly, the discharge cylinder can be inserted into the bearing without any damage to the discharge cylinder.

In addition, according to still another aspect of the present invention, there is provided an assembly method of a scroll compressor including a pair of scroll members that have a compression chamber for compressing a working fluid, a housing that houses the pair of scroll members, a discharge cylinder that discharges the compressed working fluid from the compression chamber, and that rotates around an axis with respect to the housing, a bearing that rotatably supports the discharge cylinder with respect to the housing, and a seal member that is located on a tip side of the discharge cylinder from the bearing, and that seals an outer peripheral surface of the discharge cylinder by coming into contact with the outer peripheral surface of the discharge cylinder. The discharge cylinder includes a wear resistant portion formed on an outer peripheral surface which comes into contact with the seal member. The wear resistant portion is a cylindrical member attached to the tip of the discharge cylinder. The assembly method includes attaching the cylindrical member to the tip of the discharge cylinder after the tip of the discharge cylinder is inserted into the bearing.

The cylindrical member serving as the wear resistant member is attached to the tip of the discharge cylinder after the discharge cylinder is inserted into the bearing. Accordingly, the outer diameter of the wear resistant member can be increased larger than the outer diameter at the support position where the discharge cylinder is supported by the bearing. Therefore, the sealing performance can be improved by increasing the interference of the seal member.

### Advantageous Effects of Invention

It is possible to reduce wear caused by sliding friction occurring when sealing an outer peripheral surface of a discharge cylinder rotating around an axis.

### Brief Description of Drawings

Fig. 1 is a longitudinal sectional view illustrating a double rotation scroll compressor according to an embodiment of the present invention.
Fig. 2 is an enlarged longitudinal sectional view illustrating a main part in Fig. 1.
Fig. 3 is an enlarged longitudinal sectional view illustrating a portion A in Fig. 2.
Fig. 4 is a longitudinal sectional view illustrating a modification example.
Fig. 5 is a longitudinal sectional view illustrating an assembly method of the modification example.
Fig. 6 is a plan view illustrating a driving-side scroll part.

### Description of Embodiments

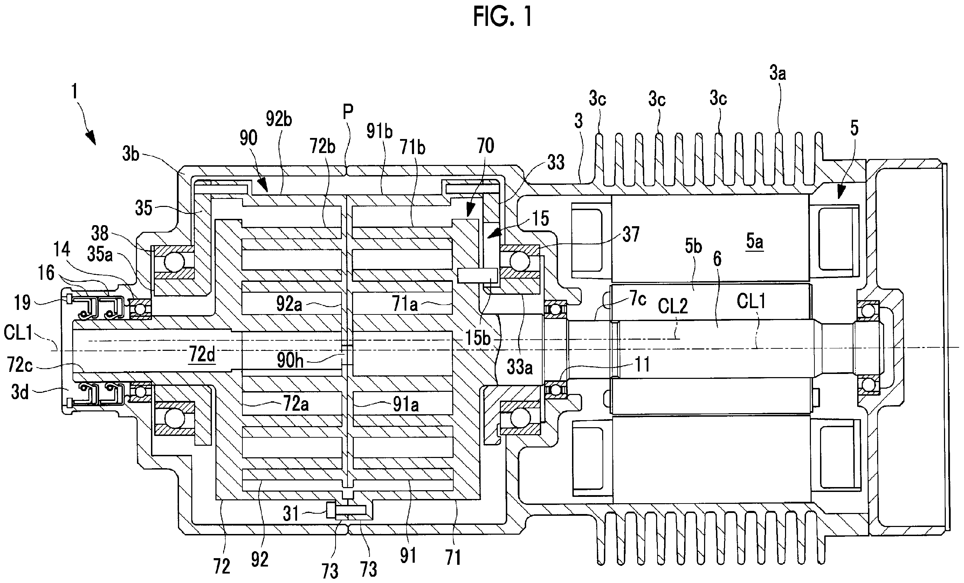

Hereinafter, an embodiment according to the present invention will be described with reference to Figs. 1 to 3.

Fig. 1 illustrates a double rotation scroll compressor (scroll compressor) 1. The double rotation scroll compressor 1 can be used as a turbocharger for compressing combustion air (fluid) to be supplied to an internal combustion engine such as a vehicle engine, for example.

The double rotation scroll compressor 1 includes a housing 3, a motor (drive unit) 5 housed on one end side of the housing 3, and a driving-side scroll member 70 and a driven-side scroll member 90 which are housed on the other end side of the housing 3.

The housing 3 has a substantially cylindrical shape, and includes a motor housing (first housing) 3a which houses the motor 5, and a scroll housing (second housing) 3b which houses the scroll members 70 and 90.

A cooling fin 3c for cooling the motor 5 is disposed in an outer periphery of the motor housing 3a. An end portion of the scroll housing 3b has a discharge port 3d for discharging compressed air (working fluid). Although not illustrated in Fig. 1, the housing 3 has an air suction port for suctioning the air (working fluid).

The scroll housing 3b of the housing 3 is divided by a division surface P located at a substantially central portion of the scroll members 70 and 90 in an axial direction. The housing 3 has a flange section (not illustrated) protruding outward at a predetermined position in a circumferential direction. The division surface P is fastened to the flange section by being fixing to the flange section through a bolt serving as fastening means.

The motor 5 is driven by power supplied from a power supply source (not illustrated). The motor 5 is rotationally controlled by a command output from a control unit (not illustrated). A stator 5a of the motor 5 is fixed to an inner peripheral side of the housing 3. A rotor 5b of the motor 5 rotates around a driving-side rotation axis CL1. A drive shaft 6 extending on the driving-side rotation axis CL1 is connected to the rotor 5b. The drive shaft 6 is connected to a first driving-side shaft portion 7c of the driving-side scroll member 70.

The driving-side scroll member 70 includes a first driving-side scroll part 71 on the motor 5 side and a second driving-side scroll part 72 on the discharge port 3d side.

The first driving-side scroll part 71 includes a first driving-side end plate 71a and a first driving-side wall body 71b.

The first driving-side end plate 71a is connected to the first driving-side shaft portion 7c connected to the drive shaft 6, and extends in a direction orthogonal to the driving-side rotation axis CL1. The first driving-side shaft portion 7c is disposed so as to be capable of pivoting around the housing 3 via a first driving-side bearing 11 serving as a ball bearing.

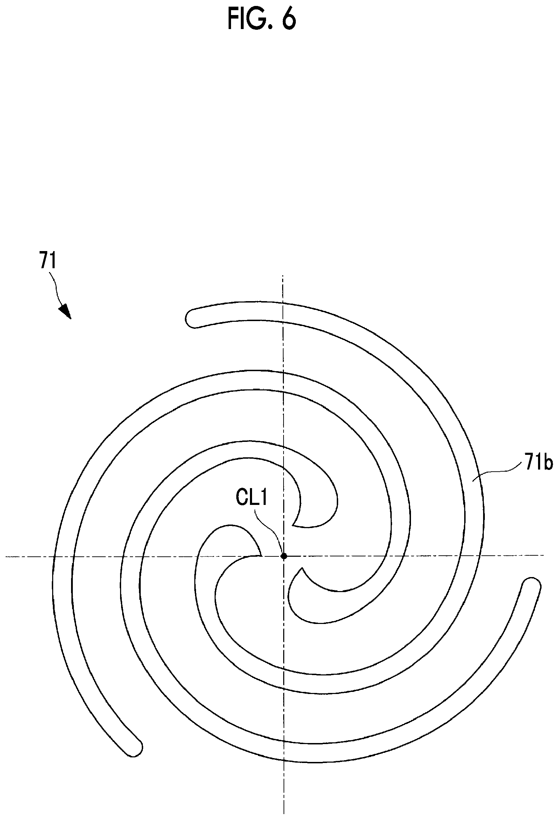

The first driving-side end plate 71a has a substantially disk shape in a plan view. The first driving-side wall body 71b having a spiral shape is disposed on the first driving-side end plate 71a. Three first driving-side wall bodies 71b are arranged in a stripe shape at an equal interval around the driving-side rotation axis CL1 (refer to Fig. 6).

As illustrated in Fig. 1, the second driving-side scroll part 72 includes a second driving-side end plate 72a and a second driving-side wall body 72b. The second driving-side wall body 72b has a spiral shape, similarly to the above-described first driving-side wall body 71b.

A cylindrical second driving-side shaft portion (discharge cylinder) 72c extending in a direction of the driving-side rotation axis CL1 is connected to the second driving-side end plate 72a. The second driving-side shaft portion 72c is rotatably disposed with respect to the housing 3 via a second driving-side bearing 14 serving as a ball bearing. The second driving-side end plate 72a has a discharge port 72d formed along the driving-side rotation axis CL1.

Between the second driving-side shaft portion 72c and the housing 3, two seal members 16 are disposed on a tip side (left side in Fig. 1) of the second driving-side shaft portion 72c from the second driving-side bearing 14. The two seal members 16 and the second driving-side bearing 14 are arranged at a predetermined interval in the direction of the driving-side rotation axis CL1. For example, a lubricant serving as grease which is a semisolid lubricant is hermetically enclosed between the two seal members 16. Only one of the two seal members 16 may be disposed therein. In this case, the lubricant is hermetically enclosed between the seal member 16 and the second driving-side bearing 14.

The first driving-side scroll part 71 and the second driving-side scroll part 72 are fixed to each other in a state where tips (free ends) of the wall bodies 71b and 72b face each other. The first driving-side scroll part 71 and the second driving-side scroll part 72 are fixed to each other by bolts (wall body fixing portions) 31 fastened to the flange section 73 which are disposed at a plurality of locations in the circumferential direction so as to protrude outward in a radial direction.

The driven-side scroll member 90 includes a first driven-side scroll part 91 and a second driven-side scroll part 92. Driven-side end plates 91a and 92a are located at substantially the center of the driven-side scroll member 90 in the axial direction (horizontal direction in the drawing). Both the driven-side end plates 91a and 92a are fixed to each other in a state where respective rear surfaces (other side surfaces) are superimposed on and in contact with each other. Both of these are fixed to each other using a bolt or pin (not illustrated) . A through-hole 90h is formed at the center of the respective driven-side end plates 91a and 92a so that the compressed air flows into the discharge port 72d.

The first driven-side wall bodies 91b is disposed on one side surface of the first driven-side end plate 91a, and the second driven-side wall body 92b is disposed on one side surface of the second driven-side end plate 92a, respectively. The first driven-side wall body 91b installed on the motor 5 side from the first driven-side end plate 91a meshes with the first driving-side wall body 71b of the first driving-side scroll part 71. The second driven-side wall body 92b installed on the discharge port 3d side from the second driven-side end plate 92a meshes with the second driving-side wall body 72b of the second driving-side scroll part 72.

Support members 33 and 35 (to be described later) are fixed to an outer periphery of the first driven-side wall body 91b. The second driven-side wall body 92b has the same configuration.

The first support member 33 and the second support member 35 are disposed in both ends of the driven-side scroll member 90 in the axial direction (horizontal direction in the drawing). The first support member 33 is located on the motor 5 side, and the second support member 35 is located on the discharge port 3d side. The first support member 33 is fixed to the tip (free end) of the first driven-side wall body 91b, and the second support member 35 is fixed to the tip (free end) of the second driven-side wall body 92b. A shaft portion 33a is disposed on a central axis side of the first support member 33, and the shaft portion 33a is fixed to the housing 3 via a first support member bearing 37. A shaft portion 35a is disposed on a central axis side of the second support member 35, and the shaft portion 35a is fixed to the housing 3 via a second support member bearing 38. In this manner, the driven-side scroll member 90 rotates around a driven-side rotation axis CL2 via the support members 33 and 35.

A pin ring mechanism (synchronous drive mechanism) 15 is disposed between the first support member 33 and the first driving-side end plate 71a. That is, a circular hole is disposed in the first driving-side end plate 71a, and a pin member 15b is disposed in the first support member 33. A driving force is transmitted from the driving-side scroll member 70 to the driven-side scroll member 90 by the pin ring mechanism 15, and both the scroll members 70 and 90 are rotationally moved at the same angular velocity in the same direction.

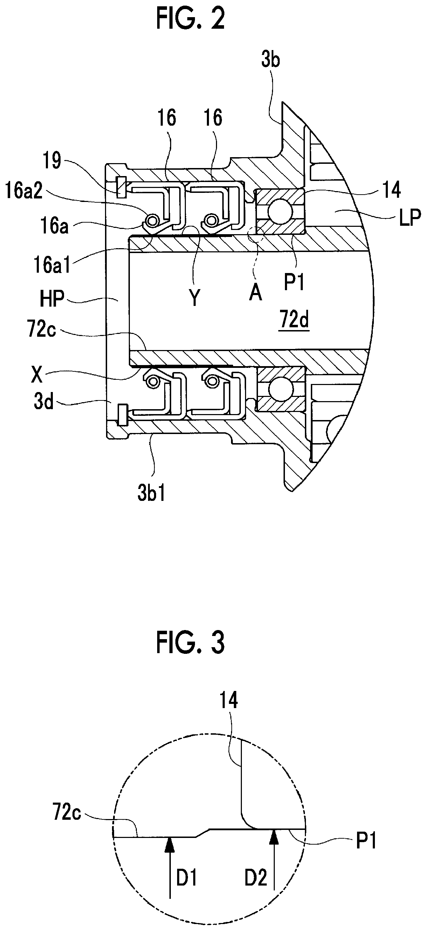

As illustrated in Fig. 2, the scroll housing 3b has a second driving-side shaft portion housing 3b1 which houses the second driving-side shaft portion 72c and the seal member 16.

Each of the seal members 16 serves as an oil seal. As illustrated in Fig. 2, the two seal members 16 are configured so that a position in the axial direction is restricted by a stopper ring 19 fitted to an inner peripheral surface of the second driving-side shaft portion housing 3b1. Each of the seal members 16 includes a seal lip portion 16a made of a resin. The seal lip portion 16a includes a lip tip portion 16a1 protruding on the inner peripheral side and coming into contact with an outer peripheral surface X of the second driving-side shaft portion 72c. An annular spring 16a2 is disposed on a rear surface side (outer peripheral side) of the seal lip portion 16a. An elastic force of the spring 16a2 causes the lip tip portion 16a1 to be pressed against the whole outer peripheral surface X of the second driving-side shaft portion 72c.

A surface hardened portion (wear resistant portion) Y is disposed on the outer peripheral surface of the second driving-side shaft portion 72c over a region with which the lip tip portion 16a1 comes into contact. The surface hardened portion Y includes a layer formed by means of nickel-phosphorus plating or formed of diamond like carbon (DLC). That is, the nickel-phosphorus plating or the DLC treatment is performed on a predetermined region on the outer peripheral surface X of the second driving-side shaft portion 72c made of an aluminum alloy.

Fig. 3 illustrates a position indicated by a reference numeral A in Fig. 2, that is, a partially enlarged support position P1 where the second driving-side shaft portion 72c is supported by the second driving-side bearing 14. As illustrated in Fig. 3, an outer diameter D1 on the tip side (left side in the drawing) of the second driving-side shaft portion 72c from the support position P1 is smaller than an outer diameter D2 at the support position P1 (D1<D2). That is, the tip side of the second driving-side shaft portion 72c is smaller in diameter than the proximal side.

When assembled, the second driving-side shaft portion 72c is inserted into the second driving-side bearing 14 fixed to the housing 3 side. In this case, the second driving-side shaft portion 72c can be inserted from the tip side having the smaller diameter.

The double rotation scroll compressor 1 having the above-described configuration is operated as follows.

If the drive shaft 6 is rotated around the driving-side rotation axis CL1 by the motor 5, the first driving-side shaft portion 7c connected to the drive shaft 6 is also rotated. In this manner, the driving-side scroll member 70 is rotated around the driving-side rotation axis CL1. If the driving-side scroll member 70 is rotated, the driving force is transmitted from each of the support members 33 and 35 to the driven-side scroll member 90 via the pin ring mechanism 15, and the driven-side scroll member 90 is rotated around the driven-side rotation axis CL2. In this case, the pin member 15b of the pin ring mechanism 15 moves while coming into contact with the inner peripheral surface of the circular hole. Accordingly, both the scroll members 70 and 90 are rotationally moved at the same angular velocity in the same direction.

If both the scroll members 70 and 90 are rotationally and pivotally moved, the air suctioned from the suction port of the housing 3 is suctioned from the outer peripheral side of both the scroll members 70 and 90, and is fetched into the compression chamber formed by both the scroll members 70 and 90. Then, the compression chamber formed by the first driving-side wall body 71b and the first driven-side wall body 91b, and the compression chamber formed by the second driving-side wall body 72b and the second driven-side wall body 92b are compressed separately from each other. As each compression chamber moves toward the center side, each volume of the compression chamber decreases, and the air is compressed accordingly. The air compressed by the first driving-side wall body 71b and the first driven-side wall body 91b passes through the through-hole 90h formed in the driven-side end plates 91a and 92a. The air merges with the air compressed by the second driving-side wall body 72b and the second driven-side wall body 92b. The merged air passes through the discharge port 72d, and is discharged outward of the discharge port 3d of the housing 3. The discharged compressed air is introduced to an internal combustion engine (not illustrated) so as to be used as the combustion air.

The lip tip portion 16a1 serving as the tip of the seal lip portion 16a of the respective seal members 16 is pressed against the outer peripheral surface X of the second driving-side shaft portion 72c by the spring 16a2 disposed in the seal lip portion 16a. In this manner, after the compressed air is discharged from the discharge port 72d, a high pressure space HP occupied by the compressed air before being discharged outward of the discharge port 3d and a low pressure space LP occupied by the suctioned air suctioned from the suction port of the housing 3 and suctioned from the outer peripheral side of both the scroll members 70 and 90 are sealed with the two seal members 16.

According to the present embodiment, the following advantageous effects are achieved.

The outer peripheral surface X of the second driving-side shaft portion 72c which comes into contact with the seal member 16 has a possibility of wear due to the sliding friction. In particular, the second driving-side shaft portion 72c employs a relatively lightweight material such as an aluminum alloy. Accordingly, the possibility of wear further increases. The possibility of wear in the second driving-side shaft portion 72c further increases. In order to prevent this possibility, according to the present embodiment, the surface hardened portion Y is disposed on the outer peripheral surface X of the second driving-side shaft portion 72c which comes into contact with the seal member 16. In this manner, the wear caused by the sliding friction is reduced. Accordingly, it is possible to suppress poor sealing performance caused by the wear.

In addition, during the assembly, when the tip side of the second driving-side shaft portion 72c is first inserted into the second driving-side bearing 14, the outer diameter D1 of the tip side of the second driving-side shaft portion 72c from the support position P1 supported by the second driving-side bearing 14 is decreased smaller than the outer diameter D2 at the support position. Accordingly, the second driving-side shaft portion 72c can be inserted into the second driving-side bearing 14 without any damage to the outer peripheral surface X of the second driving-side shaft portion 72c. In this manner, it is possible to suppress the poor sealing performance caused by the damage to the outer peripheral surface X of the second driving-side shaft portion 72c.

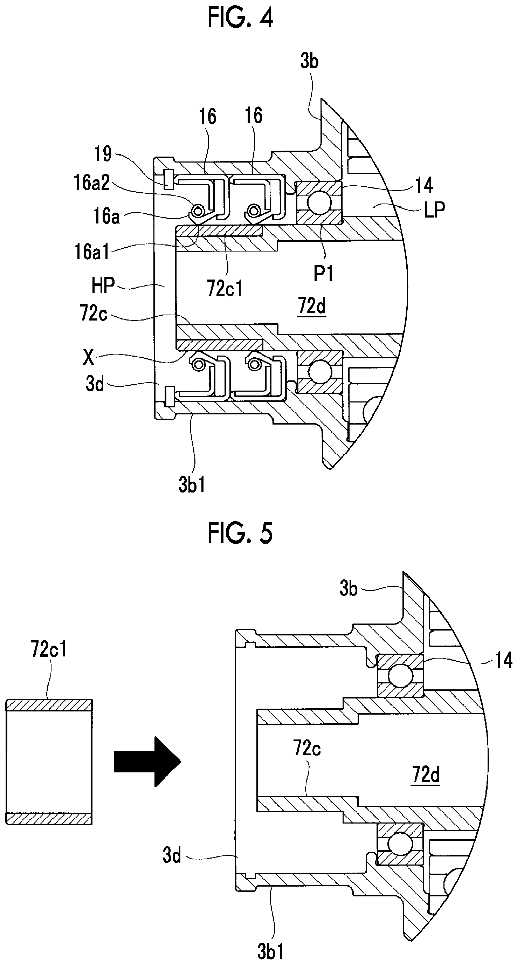

According to the present embodiment, the surface hardened portion Y is adopted as the wear resistant portion. However, as illustrated in Fig. 4, a cylindrical member 72c1 may be disposed which is formed of an iron-based material having higher wear resistance than an aluminum alloy. The cylindrical member 72c1 is press-fitted and fixed from the tip side of the second driving-side shaft portion 72c.

The cylindrical member 72c1 may have the outer diameter equal to or smaller than the outer diameter at the support position P1.

Furthermore, the outer diameter may be larger than the outer diameter at the support position P1. In this case, as illustrated in Fig. 5, after the second driving-side shaft portion 72c is inserted into the second driving-side bearing 14, the cylindrical member 72c1 is press-fitted into the tip of the second driving-side shaft portion 72c. In this manner, the cylindrical member 72c1 having the outer diameter larger than the outer diameter at the support position P1 can be assembled. Therefore, the sealing performance can be improved by increasing the interference of the seal member 16.

According to the above-described embodiment and respective modification examples, the double rotation scroll compressor is used as a turbocharger. However, the present invention is not limited thereto. The present invention can be widely used as long as the fluid is compressed. For example, the double rotation scroll compressor can be used as a refrigerant compressor used in an air conditioning machine. In addition, the scroll compressor 1 according to the present invention is also applicable to a pneumatic control system using an aerodynamic force, as a brake system for a railway vehicle.

### Reference Signs List

1: double rotation scroll compressor (scroll compressor)
3: housing
3a: motor housing
3b: scroll housing
3b1: second driving-side shaft portion housing
3c: cooling fin
3d: discharge port
5: motor (drive unit)
5a: stator
5b: rotor
6: drive shaft
7c: first driving-side shaft portion
11: first driving-side bearing
14: second driving-side bearing
15: pin ring mechanism (synchronous drive mechanism)
15b: pin member
16: seal member (oil seal)
16a: seal lip portion
16a1: lip tip portion
16a2: spring
31: bolt (wall body fixing portion)
33: first support member
33a: shaft portion
35: second support member
35a: shaft portion
37: first support member bearing
38: second support member bearing
70: driving-side scroll member
71: first driving-side scroll part
71a: first driving-side end plate
71b: first driving-side wall body
72: second driving-side scroll part
72a: second driving-side end plate
72b: second driving-side wall body
72c: second driving-side shaft portion (discharge cylinder)
72c1: cylindrical member (wear resistant portion)
72d: discharge port
73: flange section
90: driven-side scroll member
90h: through-hole
91: first driven-side scroll part
91a: first driven-side end plate
91b: first driven-side wall body
92: second driven-side scroll part
92a: second driven-side end plate
92b: second driven-side wall body
CL1: driving-side rotation axis
CL2: driven-side rotation axis
P: division surface
X: outer peripheral surface
Y: surface hardened portion (wear resistant portion)

## Claims

1. A scroll compressor comprising:
a pair of scroll members that have a compression chamber for compressing a working fluid;
a housing that houses the pair of scroll members;
a discharge cylinder that discharges the compressed working fluid from the compression chamber, and that rotates around an axis with respect to the housing; and
a seal member that seals an outer peripheral surface of the discharge cylinder by coming into contact with the outer peripheral surface of the discharge cylinder,
wherein the discharge cylinder includes a wear resistant portion formed on the outer peripheral surface which comes into contact with the seal member.

2. The scroll compressor according to Claim 1, further comprising:
a bearing that rotatably supports the discharge cylinder with respect to the housing,
wherein the seal member is located on a tip side of the discharge cylinder from the bearing, and
wherein in the discharge cylinder, an outer diameter on the tip side from a support portion supported by the bearing is smaller than an outer diameter at a support position.

3. The scroll compressor according to Claim 1, further comprising:
a bearing that rotatably supports the discharge cylinder with respect to the housing,
wherein the seal member is located on a tip side of the discharge cylinder from the bearing,
wherein the wear resistant portion is a cylindrical member attached to a tip of the discharge cylinder, and
wherein an outer diameter of the wear resistant portion is larger than an outer diameter at a support position where the discharge cylinder is supported by the bearing.

4. The scroll compressor according to any one of Claims 1 to 3, further comprising:
a drive shaft rotationally driven by a drive unit,
wherein the scroll compressor is a double rotation scroll compressor that includes a driving-side scroll member connected to the drive shaft so as to perform rotational movement and a driven-side scroll member to which power is transmitted from the driving-side scroll member so as to perform rotational movement, as the pair of scroll members.

5. An assembly method of a scroll compressor including
a pair of scroll members that have a compression chamber for compressing a working fluid,
a housing that houses the pair of scroll members,
a discharge cylinder that discharges the compressed working fluid from the compression chamber, and that rotates around an axis with respect to the housing,
a bearing that rotatably supports the discharge cylinder with respect to the housing, and
a seal member that is located on a tip side of the discharge cylinder from the bearing, and that seals an outer peripheral surface of the discharge cylinder by coming into contact with the outer peripheral surface of the discharge cylinder,
wherein the discharge cylinder includes a wear resistant portion formed on an outer peripheral surface which comes into contact with the seal member, and an outer diameter on the tip side from a support portion supported by the bearing is smaller than an outer diameter at a support position, and
wherein the assembly method comprises
positioning the discharge cylinder and the bearing after a tip of the discharge cylinder is inserted into the bearing.

6. An assembly method of a scroll compressor including
a pair of scroll members that have a compression chamber for compressing a working fluid,
a housing that houses the pair of scroll members,
a discharge cylinder that discharges the compressed working fluid from the compression chamber, and that rotates around an axis with respect to the housing;
a bearing that rotatably supports the discharge cylinder with respect to the housing, and
a seal member that is located on a tip side of the discharge cylinder from the bearing, and that seals an outer peripheral surface of the discharge cylinder by coming into contact with the outer peripheral surface of the discharge cylinder,
wherein the discharge cylinder includes a wear resistant portion formed on an outer peripheral surface which comes into contact with the seal member,
wherein the wear resistant portion is a cylindrical member attached to the tip of the discharge cylinder, and
wherein the assembly method comprises
attaching the cylindrical member to the tip of the discharge cylinder after the tip of the discharge cylinder is inserted into the bearing.

## Amended claims

### Amended claims under Art. 19.1 PCT

1. (Amended) A scroll compressor comprising:
a pair of scroll members having a compression chamber for compressing a working fluid;
a housing that houses the pair of scroll members;
a discharge cylinder that discharges the compressed working fluid from the compression chamber, and that rotates around an axis with respect to the housing; and
a seal member that seals an outer peripheral surface of the discharge cylinder by coming into contact with the outer peripheral surface of the discharge cylinder,
wherein the discharge cylinder is made of an aluminum alloy, and an outer peripheral surface which comes into contact with the seal member includes a wear resistant portion.

2. The scroll compressor according to Claim 1, further comprising:
a bearing that rotatably supports the discharge cylinder with respect to the housing,
wherein the seal member is located on a tip side of the discharge cylinder from the bearing, and
wherein in the discharge cylinder, an outer diameter on the tip side from a support portion supported by the bearing is smaller than an outer diameter at a support position.

3. The scroll compressor according to Claim 1, further comprising:
a bearing that rotatably supports the discharge cylinder with respect to the housing,
wherein the seal member is located on a tip side of the discharge cylinder from the bearing,
wherein the wear resistant portion is a cylindrical member attached to a tip of the discharge cylinder, and
wherein an outer diameter of the wear resistant portion is larger than an outer diameter at a support position where the discharge cylinder is supported by the bearing.

4. The scroll compressor according to any one of Claims 1 to 3, further comprising:
a drive shaft rotationally driven by a drive unit,
wherein the scroll compressor is a double rotation scroll compressor that includes a driving-side scroll member connected to the drive shaft so as to perform rotational movement and a driven-side scroll member to which power is transmitted from the driving-side scroll member so as to perform rotational movement, as the pair of scroll members.

5. (Amended) An assembly method of a scroll compressor including
a pair of scroll members having a compression chamber for compressing a working fluid,
a housing that houses the pair of scroll members,
a discharge cylinder that discharges the compressed working fluid from the compression chamber, and that rotates around an axis with respect to the housing,
a bearing that rotatably supports the discharge cylinder with respect to the housing, and
a seal member that is located on a tip side of the discharge cylinder from the bearing, and that seals an outer peripheral surface of the discharge cylinder by coming into contact with the outer peripheral surface of the discharge cylinder,
wherein the discharge cylinder is made of an aluminum alloy, an outer peripheral surface which comes into contact with the seal member includes a wear resistant portion, and an outer diameter on the tip side from a support portion supported by the bearing is smaller than an outer diameter at a support position, and
wherein the assembly method comprises
positioning the discharge cylinder and the bearing after a tip of the discharge cylinder is inserted into the bearing.

6. (Amended) An assembly method of a scroll compressor including
a pair of scroll members having a compression chamber for compressing a working fluid,
a housing that houses the pair of scroll members,
a discharge cylinder that discharges the compressed working fluid from the compression chamber, and that rotates around an axis with respect to the housing;
a bearing that rotatably supports the discharge cylinder with respect to the housing, and
a seal member that is located on a tip side of the discharge cylinder from the bearing, and that seals an outer peripheral surface of the discharge cylinder by coming into contact with the outer peripheral surface of the discharge cylinder,
wherein the discharge cylinder is made of an aluminum alloy, and an outer peripheral surface which comes into contact with the seal member includes a wear resistant portion,
wherein the wear resistant portion is a cylindrical member attached to the tip of the discharge cylinder, and
wherein the assembly method comprises
attaching the cylindrical member to the tip of the discharge cylinder after the tip of the discharge cylinder is inserted into the bearing.
